(19) Europäisches Patentamt
European Patent Office
Office européen des brevets

(11) EP 2 257 109 B1

(12) EUROPEAN PATENT SPECIFICATION

(45) Date of publication and mention
of the grant of the patent:
06.01.2016 Bulletin 2016/01

(51) Int Cl.:
H04W 52/00 (2009.01)

(21) Application number: 09721358.1

(22) Date of filing: 18.03.2009

(86) International application number:
PCT/CN2009/070863

(87) International publication number:
WO 2009/115043 (24.09.2009 Gazette 2009/39)

(54) **METHOD, SYSTEM AND APPARATUS FOR DETERMINING POWER OFFSET PARAMETERS**

VERFAHREN, SYSTEM UND VORRICHTUNG ZUR BESTIMMUNG VON
LEISTUNGSOFFSETPARAMETERN

PROCÉDÉ, SYSTÈME ET APPAREIL PERMETTANT DE DÉTERMINER LES PARAMÈTRES DE
DÉCALAGE DE PUISSANCE

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 21.03.2008 CN 200810102459

(43) Date of publication of application:
01.12.2010 Bulletin 2010/48

(73) Proprietor: Xiaomi Inc.
Beijing 100085 (CN)

(72) Inventor: ZHU, Xiangqian
Beijing 100083 (CN)

(74) Representative: Isarpatent
Patentanwälte Behnisch Barth Charles
Hassa Peckmann & Partner mbB
Postfach 44 01 51
80750 München (DE)

(56) References cited:
CN-A- 1 794 623      CN-A- 1 925 352
CN-A- 1 929 330      CN-A- 1 969 481
CN-A- 101 296 003    CN-A- 101 296 003

• 5 September 2005 (2005-09-05), 3GPP DRAFT;
R2-052115, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE,
XP050129203, [retrieved on 2005-09-05] *
paragraph [9.3.1.1.3] * * paragraph [11.1.1] * *
paragraph [11.2] * * paragraph [11.3] *
• NOKIA: "PO selection for E-DCH Muxing", 12
November 2004 (2004-11-12), 3GPP DRAFT;
R2-042514 PO SELECTION FOR E-DCH MUXING,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, XP050127066,
[retrieved on 2004-11-12] * the whole document *
• NORTEL: "Inclusion of e.g. physical layer model,
MAC architecture, detail Node B scheduler
mechanism and QoS Control principles", 29
November 2004 (2004-11-29), 3GPP DRAFT;
R2-04XXXX CR001REV1, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, XP050127245, [retrieved on
2004-11-29] * paragraph [10.2] - paragraph [10.3] *
• NEC: "E-TFC restriction and selection", 6 April
2005 (2005-04-06), 3GPP DRAFT; R4AH-05028,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, XP050180840,
[retrieved on 2005-04-06] * paragraph [0007] *

EP 2 257 109 B1

• TD TECH ET AL: "HARQ power offset selection during multiplexing of multiple MAC-d flows", 29 April 2008 (2008-04-29), 3GPP DRAFT; R2-082377 RELEASE 8 CLARIFICATION OF HARQ POWER OFFSET SELECTION DURING MULTIPLEXING OF MULTIPLE MAC-D FLOWS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ;, XP050140072, [retrieved on 2008-04-29] * the whole document *

**Description**

FIELD OF THE INVENTION

The present invention relates to High Speed Uplink Packet Access (HSUPA) techniques, and more particularly, to method, system and apparatus for determining a power offset.

BACKGROUND OF THE INVENTION

In order to meet develop requirements of high-speed data services in mobile networks, an Enhanced Uplink technique, also referred to as HSUPA technique, has been successively introduced into Frequency Division Duplex (FDD) and Time Division Duplex (TDD) solutions in 3GPP release 6 and release 7.

Specifically, an Enhanced Physical Uplink Control Channel (E-PUCH) and an E-DCH Uplink Control Channel (E-UCCH) are introduced into TDD HSUPA technique, wherein the E-PUCH is for transmitting data of an Enhanced Dedicated Transport Channel (E-DCH) and the E-UCCH is for transmitting control information with respect to the E-DCH data. The control information may include: transport block size, Retransmission Sequence Number (RSN) and Hybrid Automatic Retransmission reQuest (HARQ) process identity, etc. Generally, the transport block size is represented by 6bits.

In the prior art, in order to differentiate Quality of Service (QoS) requirements of different Medium Access Control-dedicated (MAC-d) flows, a higher layer may configure a Power Offset (PO) for each MAC-d flow. Thus, if data to be transmitted at a User Equipment (UE) is carried by multiple MAC-d flows, the data carried by the multiple MAC-d flows can be multiplexed into a MAC E-DCH Protocol Data Unit (MAC-e PDU) according to a predefined rule. The MAC-e PDU may be regarded as a data block submitted by a MAC layer to a PHY layer. The predefined rule may include priorities of the data carried by the MAC-d flows, whether different MAC-d flows can be multiplexed into one MAC-e PDU, etc.

If the data carried by the multiple MAC-d flows is multiplexed into one MAC-e PDU for transmission, existing specifications define that a PO used by the MAC-e PDU should be the PO corresponding to a MAC-d flow on which a highest priority logical channel is mapped. Thus, based on the PO, the UE may calculate a transmission power for the E-PUCH and a NodeB may calculate a Signal-to-Interference Ratio (SIR). Specifically, the UE may calculate the transmission power for the E-PUCH according to a following equation:

$$P_{E-PUCH} = P_{e-base} + L + \beta_e \qquad \text{(Equation 1)}$$

$$\beta_e = \beta_{0,e} + \alpha_e + \Delta_{harq} \qquad \text{(Equation 2)}$$

Based on the Equation 1 and Equation 2, it can be obtained that:

$$P_{E-PUCH} = P_{e-base} + L + \beta_{0,e} + \alpha_e + \Delta_{harq} \qquad \text{(Equation 3)}$$

wherein $P_{e-base}$ is related to $PRX_{des\_base}$ and $P_{TPC}$, wherein $PRX_{des\_base}$ denotes an initial value of $P_{ebase}$ and $P_{TPC}$ denotes a cumulative value of Transmit Power Control (TPC) calculated by the NodeB and the UE for the E-PUCH, as shown in a following equation:

$$P_{e-base} = PRX_{des-base} + step * \sum_i TPC_i = PRX_{des-base} + P_{TPC} \qquad \text{(Equation 4)}$$

wherein $\beta_e$ denotes the SIR calculated by the NodeB. $\beta_{0,e}$ in the $\beta_e$ is related to a code rate of a transport block carried by the E-PUCH, i.e., the code rate of a MAC-e PDU can be easily determined after the size of the MAC-e PDU is determined, then $\beta_{0,e}$ can be determined. $\alpha_e$ is related to a spreading factor of the E-PUCH. $\Delta_{harq}$ denotes the PO corresponding to the MAC-d flow on which the highest priority logical channel is mapped, ranging within [0dB, 6dB]. $PRX_{des\_base}$ denotes an initial value configured for $P_{ebase}$, and is generally configured to be an average interference value of uplink E-PUCH slots.

It can be seen that, when the transmission power of the E-PUCH is calculated in the prior art, values of $\beta_{0,e}$ and $\alpha_e$ are both fixed and can be calculated based on the MAC-e PDU carried by the E-PUCH and the Spreading Factor of E-PUCH; $PRX_{des\_base}$ is also a known parameter, $P_{TPC}$ can be calculated based on a previous TPC command. Therefore, the transmission power of the E-PUCH can be calculated by the UE as long as the UE knows the $\Delta_{harq}$, and the SIR can be calculated by the NodeB as long as the NodeB knows the $\Delta_{harq}$.

For the same UE, MAC-e PDUs transmitted at different time may have different MAC-d flows on which the highest priority logical channel is mapped. Accordingly, the $\Delta_{harq}$ corresponding to the MAC-e PDU will change frequently. Acting as a receiving end of the MAC-e PDU, the NodeB needs to decode the MAC-e PDU currently received and determine the PO corresponding to the MAC-e PDU according to MAC-d flows contained in the decoded MAC-e PDU. After that, the NodeB can calculate the SIR based on the PO obtained so as to perform a proper power control. And the UE may calculate the transmission power of the E-PUCH based on the PO obtained.

But the NodeB may fail to correctly decode a received MAC-e PDU due to poor channel quality or other reasons. Thus, it is impossible to obtain the MAC-d flows contained in the MAC-e PDU. Therefore, the PO of the received MAC-e PDU cannot be determined and the power control cannot be performed accurately, which affects the calculation of the transmission power of the E-PUCH by the UE and further affects system performance.

3GPP Draft R2-052115 describes two transmission mechanisms depending on whether the Scheduling Information is transmitted alone, or with data. When the Scheduling Information is sent alone, the power offset is configured by RRC. When Scheduling Information is sent with data, use the HARQ power offset attribute of the highest priority data, the maximum number of transmissions among all the considered HARQ profiles associated to the MAC-d flows for the MAC-e PDU to be transmitted.

3GPP Draft R2-042514 defines that the UE selects the power offset of the HARQ profile associated to the MAC-d flows with the highest priority logical channel in the MAC-d PDU.

3GPP Draft R2-04XXXX describes that power offset attributes of MAC-d flows are part of the HARQ profiles of the MAC-d flow. The SRNC may decide to signal to the UE new values for the power offset attributes for one (or several) MAC-d flows.

3GPP Draft R4AH-05028 describes that the UE shall use the multiplexing list of the different MAC-d flows to see if a certain MAC-d flow can use the power offset of the highest priority MAC-d flow to be transmitted. In case the maximum UE transmit power is exceeded, the UE shall scale down the E-DPDCH only on TTI level for retransmissions. At slot level all uplink physical channels are equally compressed. The scaling down of only E-DPDCH at slot level remains FFS.

## SUMMARY OF THE INVENTION

Embodiments of the present invention provide method, system and apparatus for determining a Power Offset (PO), so as to determine the PO corresponding to a currently transmitted MAC-e PDU and to improve system performance.

According to an embodiment of the present invention, a method for determining a power offset is provided. The method includes:

receiving, by a first entity, POs respectively corresponding to all MAC-d flows carrying a service to be transmitted at a User Equipment (UE) from a network controller, and receiving, by the first entity, a PO corresponding to Scheduling Information (SI) from the network controller; wherein the POs corresponding to all MAC-d flows and the PO corresponding to the SI are also configured by the network controller for a second entity;

if a currently transmitted MAC E-DCH Protocol Data Unit (MAC-e PDU), comprises only the SI, determining, by the first entity, the PO corresponding to the SI as the PO corresponding to the currently transmitted MAC-e PDU

if a currently transmitted MAC-e PDU comprises the SI and higher-layer data carried by at least one MAC-d flow or comprises only higher-layer data carried by at least one MAC-d flow; determining, by the first entity, a maximum PO among the POs corresponding to all MAC-d flows as the PO corresponding to the currently transmitted MAC-e PDU;

wherein the first entity is the UE and the second entity is a NodeB, or the first entity is a NodeB and the second entity is the UE..

According to still another embodiment of the present invention, a UE is provided. The UE includes: a first configuration receiving unit and a first determining unit; wherein the first configuration receiving unit is adapted to receive a PO configured corresponding to scheduling information (SI) and POs configured respectively corresponding to all MAC-d flows carrying a service to be transmitted; wherein the POs corresponding to all MAC-d flows and the PO corresponding to the SI are also received by a NodeB; the first determining unit is adapted to

determine the PO corresponding to the SI as the PO of a currently transmitted MAC-e PDU if the currently transmitted MAC-e PDU comprises only the SI; and

if the currently transmitted MAC-e PDU comprises the SI and higher-layer data carried by at least one MAC-d flow or comprises only the higher-layer data carried by the at least one MAC-d flow, determine a maximum PO among the POs of all MAC-d flows as the PO of the currently transmitted MAC-e PDU.

According to yet another embodiment of the present invention, a NodeB is provided. The NodeB includes: a second configuration receiving unit and a second determining unit; wherein
the first configuration receiving unit is adapted to receive a PO configured corresponding to scheduling information (SI) and POs configured respectively corresponding to all MAC-d flows carrying a service to be transmitted; wherein the POs corresponding to all MAC-d flows and the PO corresponding to the SI are also received by a NodeB; the first determining unit is adapted to

determine the PO corresponding to the SI as the PO of a currently transmitted MAC-e PDU if the currently transmitted MAC-e PDU comprises only the SI; and

if the currently transmitted MAC-e PDU comprises the SI and higher-layer data carried by at least one MAC-d flow or comprises only the higher-layer data carried by the at least one MAC-d flow, determine a maximum PO among the POs of all MAC-d flows as the PO of the currently transmitted MAC-e PDU.

According to yet another embodiment of the present invention, a system is provided. The system includes: a PO configuring module, a NodeB and a UE as described above; wherein
the PO configuring module is adapted to configure POs respectively corresponding to all MAC-d flows carrying a service to be transmitted at a UE and a PO corresponding to SI for the NodeB and the UE.

It can be seen from the above solution that, in embodiments of the present invention, through configuring a PO corresponding to an information element constituting a MAC-e PDU for the NodeB and the UE, the UE and the NodeB determine a PO corresponding to a currently transmitted MAC-e PDU based on information element constituting the currently transmitted MAC-e PDU, the PO configured and a predefined PO determining rule, it is realized that if the MAC-d flows carrying a service to be transmitted at the UE is not changed, POs of MAC-e PDUs received by the NodeB at any time will be the same as long as the type of resource of information element constituting each received MAC-e PDU is the same as that mapped by (used by) the information element constituting the currently transmitted MAC-e PDU, i.e., remain to be the PO currently determined. Therefore, the NodeB does not need to decode the received MAC-e PDU to determine the PO corresponding to the MAC-e PDU as in the prior art. Thus, the problems of failure to obtaining the PO corresponding to the MAC-e PDU and inaccurate power control brought out by the NodeB's incapable of correctly decoding the received MAC-e PDU due to poor channel quality or other reasons can be avoided, and power control performance of the NodeB is improved. Meanwhile, since the NodeB can easily get knowledge of the PO corresponding to MAC-e PDU, the procedure for the UE to configure a transmission power for the E-PUCH is also simplified.

BRIEF DESCRIPTION OF THE DRAWINGS

FIG.1 is a flowchart illustrating a method for determining a PO in accordance with an embodiment of the present invention.

FIG.2 is a schematic diagram illustrating a structure of a UE in accordance with an embodiment of the present invention.

FIG.3 is a schematic diagram illustrating a structure of a NodeB in accordance with an embodiment of the present invention.

DETAILED DESCRIPTION OF THE INVENTION

The present invention will be described in detail hereinafter with reference to accompanying drawings and embodiments to make the technical solution and merits therein clearer.

An embodiment of the present invention mainly includes: configuring a PO corresponding to an information element for a NodeB and a UE; the UE and the NodeB determining a PO for a current MAC-e PDU according to an information element constituting the current MAC-e PDU, the PO configured and a predefined PO determining rule.

Considering that in the enhanced high-speed uplink techniques, a UE may submit Scheduling Information (SI) to request the NodeB to schedule resources or to assist the NodeB to schedule resources, in embodiments of the present invention, the information element constituting the currently transmitted MAC-e PDU may be different. For example, the information element may include only the SI or includes the SI and higher-layer data carried by at least one MAC-d flow or includes only the higher-layer data carried by at least one MAC-d flow. Embodiments of the present invention do not restrict the contents of the information elements.

The PO corresponding to the information element may be configured for the NodeB and the UE by a higher layer device, e.g. a network controller or other modules. Embodiments of the present invention do not have particular requirements for the module performing the configuration as long as the module can configure the PO for the NodeB and the UE.

In addition, the embodiments of the present invention do not require that the NodeB and the UE determine the PO corresponding to the currently transmitted MAC-e PDU synchronously. There is no requirement for the time sequence that the UE and the NodeB determine the PO corresponding to the currently transmitted MAC-e PDU as long as the technical effect of the present invention is not affected.

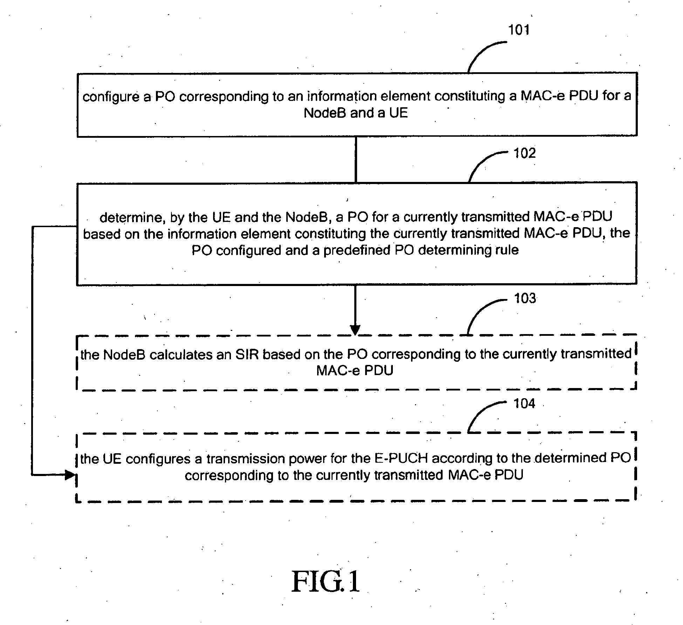

FIG.1 is a flowchart illustrating a method for determining a PO in accordance with an embodiment of the present invention. As shown in FIG.1, the method may include steps as follows.

Step 101, configure a PO corresponding to an information element constituting a MAC-e PDU for a NodeB and a UE.

The configuring the PO corresponding to the information element for the NodeB and the UE may include: configuring a PO corresponding to SI for the NodeB and the UE; or configuring POs respectively corresponding to all MAC-d flows carrying a service to be transmitted at the UE for the NodeB and the UE. The service to be transmitted at the UE may include all higher-layer data carried by all the MAC-d flows. Generally, embodiments of the present invention do not merely configure the PO corresponding to the SI for the NodeB and the UE.

Step 102, the UE and the NodeB determine a PO for a currently transmitted MAC-e PDU according to an information element constituting the currently transmitted MAC-e PDU, the PO configured and a predefined PO determining rule.

In this embodiment, if the PO configured for the NodeB and the UE in step 101 is the PO corresponding to the SI and the information element constituting the currently transmitted MAC-e PDU includes only the SI, the UE and the NodeB may determine the PO for the currently transmitted MAC-e PDU based on the predefined PO determining rule. The predefined PO determining rule may be: selecting the PO corresponding to the SI. Thus, the UE and the NodeB may determine the PO corresponding to the SI in the currently transmitted MAC-e PDU as the PO corresponding to the MAC-e PDU. Since the length of the SI is fixed, the NodeB is able to calculate an SIR according to the PO corresponding to the SI having the fixed length, so as to achieve the objective of the present invention.

It should be noted that, information elements in the UE and the NodeB can be multiplexed into one MAC-e PDU on the premise that the information elements to be multiplexed into the same MAC-e PDU are able to be mapped to the same type of resource, i.e., the information elements (MAC-d flows) constituting the same MAC-e PDU must be mapped to the same type of resource. Thus, the resource utilized by the MAC-e PDU may be the resource mapped by the information elements (MAC-d flows) in the MAC-e PDU. The types of resources may include scheduled resource and non-scheduled resource. Therefore, if what are configured in step 101 are the PO corresponding to the SI and the POs corresponding to all MAC-d flow carrying the service of the UE and the information element constituting the currently transmitted MAC-e PDU includes the SI and higher-layer data carried by at least one MAC-d flow or includes only the higher-layer data carried by the at least one MAC-d flow, the UE and the NodeB may determine the PO for the currently transmitted MAC-e PDU according to the predefined PO determining rule. In one example, the predefined PO determining rule may be selecting a maximum PO. The UE and the NodeB must adopt the same rule.

In this embodiment, suppose the predefined PO determining rule is: selecting the maximum PO. The reason for selecting the maximum PO as the PO corresponding to the MAC-e PDU is that a MAC-d flow having the maximum PO generally has the highest priority level. Therefore, the determining the PO corresponding to the currently transmitted MAC-e PDU may include: selecting, from all MAC-d flows, MAC-d flows use the same type of resource with the MAC-e PDU; determining the maximum PO among POs corresponding to the selected MAC-d flows as the PO corresponding to the currently transmitted MAC-e PDU. The type of resource used by the MAC-e PDU may be scheduled or non-scheduled resource.

Generally, higher-layer data of a service to be transmitted at the UE carried by all MAC-d flows cannot be multiplexed into one MAC-e PDU at the same time. In this embodiment, when determining the PO corresponding to the currently transmitted MAC-e PDU, the MAC-d flows mapped to the same type of resource as the MAC-e PDU are selected from all MAC-d flows of the service to be transmitted at the UE. Then, the maximum PO among the POs respectively corresponding to the selected MAC-d flows is determined to be the PO corresponding to the currently transmitted MAC-e PDU. Thus, it can be guaranteed that, if the MAC-d flows contained in the service to be transmitted at the UE are not changed, e.g., there is no MAC-d flow added into or removed from the service to be transmitted at the UE, the PO corresponding to any MAC-e PDU transmitted at any time is the same as the PO corresponding to the above MAC-e PDU, i.e., the PO corresponding to the MAC-e PDU transmitted at any time will remain to be the PO corresponding to the above MAC-e PDU. In addition, in this embodiment, the method of multiplexing the SI and the higher-layer data carried by the at least one MAC-d flow into one MAC-e PDU and the method of multiplexing the higher-layer data carried by the at least one MAC-d flow into one MAC-e PDU are similar to those in the prior art and will not be repeated herein.

For example, suppose a service to be transmitted at the UE includes N MAC-d flows. The MAC-d flows can be mapped to the same type of resource. POs respectively corresponding to the N MAC-d flows are $PO_1$, $PO_2$......$PO_N$. If a PO is required for SI, the embodiment will also configure a PO for the SI, i.e., $PO_{SI}$. Suppose that only the higher-layer data carried by first 10 MAC-d flows among the N MAC-d flows are multiplexed into the currently transmitted MAC-e PDU or only the SI and the higher-layer data carried by the first 10 MAC-d flows among the N MAC-d flows are multiplexed into the currently transmitted MAC-e PDU, the method for determining the PO corresponding to the currently transmitted MAC-e PDU may be:

$$PO\_max = max(PO_1, PO_2,......, PO_N) \qquad \text{(Equation 5)}$$

where, $max(x_1, x_2, ...,x_N)$ means to select the maximum value among all the variables.

If the service to be transmitted at the UE is a mixed service, i.e., including scheduled service and non-scheduled service, the number of the MAC-d flows carrying the mixed service is 6, the POs respectively corresponding to the MAC-d flows are: $PO_1$, $PO_2$,......, $PO_6$. The first to the third MAC-d flows are mapped to scheduled resource, the fourth to the sixth MAC-d flows are mapped to non-scheduled resource, and the currently transmitted MAC-e PDU includes only the fourth and the fifth MAC-d flows. Since the fourth and the fifth MAC-d flows are mapped to the non-scheduled resource, MAC-d flows mapped to the non-scheduled resource among the 6 MAC-d flows should be determined, i.e., the fourth to the sixth MAC-d flows are selected. Afterwards, the PO corresponding to the currently transmitted MAC-e PDU may be determined according to a following equation:

$$PO\_max = max(PO_4, PO_5, PO_6) \qquad \text{(Equation 5')}$$

where, $PO_4$, $PO_5$, $PO_6$ are the POs corresponding to the fourth to the sixth MAC-d flows, and $max(PO_4, PO_5, PO_6)$ means to select a maximum value among all the variables ($PO_4$, $PO_5$, $PO_6$). Then, the PO selected is determined as the PO corresponding to the MAC-e PDU.

It can be seen from the above that, when the MAC-d flows carrying the service to be transmitted at the UE are not changed, the POs of MAC-e PDUs which are received at any time by the NodeB and use the same type of resource with the above MAC-e PDU will not change, i.e., remain to be the currently determined PO. In this way, the NodeB has no need to decode a received MAC-e PDU to obtain MAC-d flows contained in the MAC-e PDU for determining the PO corresponding to the MAC-e PDU as in the prior art. Thus, the problem that the NodeB cannot perform an accurate power control resulted from incorrect decoding of the received MAC-e PDU due to poor channel quality or other reasons can be avoided.

It should be noted that, in this embodiment, when a new MAC-d flow is configured for the UE and the NodeB, a PO corresponding to the new MAC-d flow should be configured for the UE and the NodeB. Or, when a MAC-d flow configured for the UE and the NodeB is removed, the PO corresponding to the MAC-d flow should be deleted for the UE and the NodeB. When higher-layer data to be transmitted is increased, the configuring the new MAC-d flow for the UE and the NodeB includes: a PO configuring module configures the MAC-d flow for the UE and the NodeB for carrying the newly added higher-layer data through signaling, and the newly added higher-layer data will be transmitted. When higher-layer data to be transmitted is deleted, the above deleting the MAC-d flow configured for the UE and the NodeB includes: the PO configuring module deletes the MAC-d flow which is configured for the UE and the NodeB for carrying the deleted higher-layer data and the deleted higher-layer data will not be transmitted. Thus, the above operations for determining the PO corresponding to the MAC-e PDU will be executed again based on the changed MAC-d flows.

In this embodiment, after the NodeB determines the PO corresponding to the currently transmitted MAC-e PDU, step **103** may be performed. After the UE determines the PO corresponding to the currently transmitted MAC-e PDU, step **104** may be performed.

Step **103,** the NodeB calculates an SIR based on the determined PO corresponding to the currently transmitted MAC-e PDU.

In this embodiment, if in step **102** the information element constituting the currently transmitted MAC-e PDU includes the higher-layer data carried by the at least one MAC-d flow and the SI or includes only the higher-layer data carried by the at least one MAC-d flow, and if the predefined PO determining rule is to select the maximum PO, the method for the NodeB to accurately calculate the SIR may be:

$$\beta_e = \beta_{0,e} + \alpha_e + \Delta_{harq} = \beta_{0,e} + \alpha_e + \text{PO\_max} \qquad \text{(Equation 6)}$$

where, $\beta_{0,e}$, $\alpha_e$ $\alpha_e$ are known parameters can be determined as similar as in the prior art and will not be described herein, PO_max denotes the maximum PO among the POs corresponding to all the MAC-d flows determined in step **102.** The range of PO_max is [0dB, 6dB]. In this embodiment, the NodeB can get accurate knowledge of the PO corresponding to the currently transmitted MAC-e PDU by the above method. Thus, the problem of obscure SIR can be avoided.

If the information element constituting the currently transmitted MAC-e PDU in step **102** includes only the SI and the predefined PO determining rule is to select the PO corresponding to the SI, the method for the NodeB to accurately calculate the SIR may be:

$$\beta_e = \beta_{0,e} + \alpha_e + \Delta_{harq} = \beta_{0,e} + \alpha_e + \text{PO}_{SI} \qquad \text{(Equation 6')}$$

where, $\beta_{0,e}$, $\alpha_e$ are known parameters can be determined as similar as in the prior art and will not be described herein, $\text{PO}_{SI}$ denotes the PO corresponding to the SI in the currently transmitted MAC-e PDU. In this embodiment, the NodeB determines the PO corresponding to the currently transmitted MAC-e PDU based on the PO corresponding to the SI whose length is fixed. Thus, the problem of obscure SIR is avoided.

Step **104**, the UE configures a transmission power for transmitting the MAC-e PDU on the E-PUCH according to the above determined PO corresponding to the currently transmitted MAC-e PDU.

According to the prior art, after the PO corresponding to the currently transmitted MAC-e PDU is determined, the PO is utilized for calculating the transmission power of the MAC-e PDU on the E-PUCH. The detailed calculating method is similar to that in the prior art and will not be repeated herein.

The method for determining PO has been described in detail with reference to the embodiments of the present invention. Hereinafter, system and apparatus for determining PO will be described in detail with reference to embodiments of the present invention.

The system for determining PO according to an embodiment of the present invention may include: a PO configuring module, a UE and a NodeB. Similar to the method shown in **FIG.1**, the PO configuring module of this embodiment is adapted to configure a PO corresponding to an information element constituting a MAC-e PDU for the NodeB and the UE. The UE of this embodiment is adapted to determine a PO of a currently transmitted MAC-e PDU based on an information element constituting the currently transmitted MAC-e PDU, the PO configured and a predefined PO determining rule. The NodeB is adapted to determine the PO of the currently transmitted MAC-e PDU based on the information element constituting the currently transmitted MAC-e PDU, the PO configured and the predefined PO determining rule.

In implementation, the PO configuring module may be a network controller or any module capable of implementing the configuration.

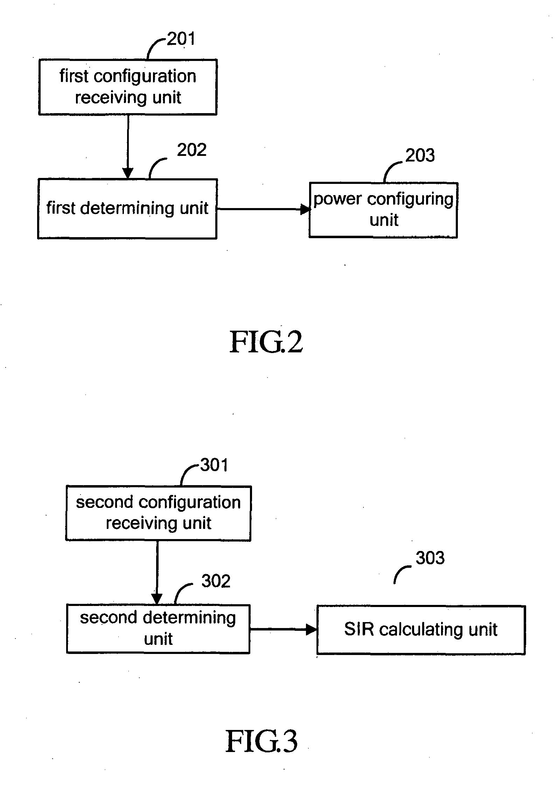

In implementation, the UE may have various structures. **FIG.2** shows one possible structure of the UE. As shown in **FIG.2,** the UE may include a first configuration receiving unit **201** and a first determining unit **202.**

The first configuration receiving unit **201** is adapted to receive a PO configured corresponding to an information element constituting a MAC-e PDU.

The first determining unit **202** is adapted to determine a PO for a currently transmitted MAC-e PDU based on an information element constituting the currently transmitted MAC-e PDU, the PO configured and a predefined PO determining rule.

When the PO corresponding to SI is configured, the first configuration receiving unit **201** is adapted to receive the PO configured for the SI. When the information element constituting the currently transmitted MAC-e PDU includes only the SI, the first determining unit **202** is adapted to determine the PO corresponding to the SI in the currently transmitted MAC-e PDU to be the PO corresponding to the MAC-e PDU.

When the PO corresponding to the SI and the POs corresponding to all MAC-d flows carrying the service to be transmitted are configured, the first configuration receiving unit **201** is adapted to receive the POs configured for all the MAC-d flows carrying the service to be transmitted, wherein the service to be transmitted includes higher-layer data carried by all the MAC-d flows. When the information element constituting the currently transmitted MAC-e PDU includes the SI and higher-layer data carried by at least one MAC-d flow or includes only the higher-layer data carried by at least one MAC-d flow, the first determining unit **202** is adapted to select MAC-d flows using the same type of resource with the MAC-e PDU from all MAC-d flows; and adapted to determine a maximum PO among the POs corresponding to the selected MAC-d flows as the PO of the currently transmitted MAC-e PDU.

In addition, the UE may also include a power configuring unit **203.**

The power configuring unit **203** is adapted to configure a transmission power for the E-PUCH based on the PO corresponding to the currently transmitted MAC-e PDU determined by the first determining unit **202.**

In implementation, the NodeB may have various structures. **FIG.3** shows one possible structure of the NodeB. As shown in **FIG.3,** the NodeB may include a second configuration receiving unit **301** and a second determining unit **302.**

The second configuration receiving unit **301** is adapted to receive a PO configured for an information element constituting a MAC-e PDU.

The second determining unit **302** is adapted to determine a PO for a currently transmitted MAC-e PDU based on an information element constituting the currently transmitted MAC-e PDU, the PO configured and a predefined PO determining rule.

When a PO is configured for SI, the second configuration receiving unit **301** is adapted to receive the PO configured for the SI. When the information element constituting the currently transmitted MAC-e PDU includes only the SI, the second determining unit **302** is adapted to determine the PO corresponding to the SI in the currently transmitted MAC-e PDU as the PO of the currently transmitted MAC-e PDU.

When the PO corresponding to the SI and POs corresponding to all MAC-d flows carrying a service to be transmitted at the UE is configured, the second configuration receiving unit **301** is adapted to receive the POs configured for all the MAC-d flows carrying the service to be transmitted, wherein the service to be transmitted at the UE includes higher-layer data carried by all the MAC-d flows. When the information element constituting the currently transmitted MAC-e PDU includes the SI and higher-layer data carried by at least one MAC-d flow or includes only the higher-layer data carried by the at least one MAC-d flow, the second determining unit **302** is adapted to select MAC-d flows using the same type of resource with the MAC-e PDU from all MAC-d flows, and adapted to determine a maximum PO among the POs of the selected MAC-d flows as the PO of the currently transmitted MAC-e PDU.

In addition, the NodeB may further include an SIR calculating unit **303.**

The SIR calculating unit **303** is adapted to calculate an SIR based on the PO determined by the second determining unit.

In embodiments of the present invention, procedures performed by units in the UE and the NodeB accord with the operations shown in **FIG.1.** The units can be physical functional units or software functional units and can be further divided or combined. In implementation, those skilled in the art can make adjustments according to the requirements, thus the detailed methods for implementing the technical scheme will not be enumerated one by one herein.

It can be seen that, embodiments of the present invention configure a PO corresponding to an information element constituting a MAC-e PDU for a NodeB and a UE. Then the UE and the NodeB may determine a PO corresponding to a currently transmitted MAC-e PDU based on an information element constituting the currently transmitted MAC-e PDU, the PO configured and a predefined PO determining rule. In this way, when the MAC-d flows carrying a service to be transmitted at the UE are not changed, the PO of any MAC-e PDU which is received by the NodeB and utilizes the same type of resource as the above MAC-e PDU will not change, i.e., will remain to be the PO currently determined. Therefore, the NodeB does not have to decode a received MAC-e PDU to obtain MAC-d flows contained in the MAC-e PDU for determining the PO corresponding to the currently transmitted MAC-e PDU as in the prior art. Thus, the problem that the NodeB cannot perform an accurate power control resulted from incorrect decoding of the received MAC-e PDU due to poor channel quality or other reasons may be avoided. Meanwhile, it is easy for the UE to configure a transmission power for the E-PUCH, which further improves the power control performance of the NodeB.

The purpose, technical solution and merits of the present invention have been described in detail with reference to the above embodiments. It should be noted that the foregoing is only embodiments of the present invention and is not for use in limiting the protection scope of the present invention. Any modification, equivalent substitution, improvement within the principle of the invention should be covered in the protection scope of the invention.

## Claims

1. A method for determining a Power Offset, PO, comprising:

receiving, by a first entity, Pos respectively corresponding to all MAC-d flows carrying a service to be transmitted at a User Equipment, UE, from a network controller, and receiving, by the first entity, a PO corresponding to Scheduling Information, SI, from the network controller;

wherein the Pos corresponding to all MAC-d flows and the PO corresponding to the SI are also configured by the network controller for a second entity (101);

if a currently transmitted MAC E-DCH Protocol Data Unit, MAC-e PDU, comprises only the SI, determining, by the first entity, the PO corresponding to the SI as the PO corresponding to the currently transmitted MAC-e PDU (102);

if a currently transmitted MAC-e PDU comprises the SI and higher-layer data carried by at least one MAC-d flow or comprises only higher-layer data carried by the at least one MAC-d flow;

determining, by the first entity, a maximum PO among the POs corresponding to all MAC-d flows as the PO corresponding to the currently transmitted MAC-e PDU (102);

wherein the first entity is the UE and the second entity is a NodeB, or the first entity is a NodeB and the second entity is the UE.

2. The method of claim 1, further comprising:

if a new MAC-d flow is configured for the first entity, configuring, by the network controller, a PO corresponding to the new MAC-d flow for the first entity; or if a MAC-d flow configured for the first entity is removed, deleting, by the network controller, a PO corresponding to the MAC-d flow for the first entity.

3. The method of claim 1, wherein the first entity is the NodeB and the second entity is the UE, the method further comprises:

after the NodeB determines the PO corresponding to the currently transmitted MAC-e PDU, calculating, by the NodeB, a Signal-to-Interference Ratio (SIR) based on the PO corresponding to the currently transmitted MAC-e PDU (103).

4. The method of claim 1, wherein the first entity is the UE and the second entity is the NodeB, the method further comprises:

after the UE determines the PO corresponding to the currently transmitted MAC-e PDU, configuring, by the UE, a transmission power for an Enhanced Physical Uplink Control Channel, E-PUCH, based on the PO corresponding to the MAC-e PDU (104).

5. A User Equipment (UE), comprising:

a first configuration receiving unit (201) and a first determining unit (202);
wherein
the first configuration receiving unit (201) is adapted to receive a PO configured corresponding to scheduling information, SI, and Pos configured respectively corresponding to all MAC-d flows carrying a service to be transmitted;
wherein the Pos corresponding to all MAC-d flows and the PO corresponding to the SI are also received by a NodeB;
the first determining unit (202) is adapted to
determine a PO corresponding to the SI as the PO of a currently transmitted MAC E-DCH Protocol Data Unit, MAC-e PDU, if the currently transmitted MAC-e PDU comprises only the SI; and
if a currently transmitted MAC-e PDU comprises the SI and higher-layer data carried by at least one MAC-d flow or comprises only the higher-layer data carried by the at least one MAC-d flow,
determine a maximum PO among the POs of all MAC-d flows as the PO of the currently transmitted MAC-e PDU.

6. The UE of claim 5, further comprising:

a power configuring unit (203), adapted to configure a transmission power for an Enhanced Physical Uplink Control Channel, E-PUCH, based on the PO corresponding to the currently transmitted MAC-e PDU determined by the first determining unit.

7. A NodeB, comprising:

a second configuration receiving unit (301) and a second determining unit (302);
wherein

the second configuration receiving unit (301) is adapted to receive a PO configured for scheduling information, SI, and Pos configured for all MAC-d flows carrying a service at a User Equipment (UE);

wherein the Pos corresponding to all MAC-d flows and the PO corresponding to the SI are also received by the User Equipment, UE;

the second determining unit is adapted to

determine a PO corresponding to the SI of the PO of a currently transmitted MAC E-DCH Protocol Data Unit, MAC-e PDU, if the currently transmitted Mac-e PDU comprises only the SI; and

if a currently transmitted MAC-e PDU comprises the SI and higher-layer data carried by at least one MAC-d flow or comprises only the higher-layer data carried by the at least one MAC-d flow,

determine a maximum PO among the POs of all MAC-d flows as the PO of the currently transmitted MAC-e PDU.

8. The NodeB of claim 7, further comprising:

a Signal-to-Interference Ratio, SIR, calculating unit (303), adapted to calculate an SIR based on the PO determined by the second PO determining unit.

9. A system for determining a Power Offset, PO, **characterized by** comprising:

a PO configuring module, adapted to configure Pos respectively corresponding to all MAC-d flows carrying a service to be transmitted at a User Equipment, UE, and a PO corresponding to Scheduling Information, SI, for the NodeB and the UE;
a User Equipment, UE, according to claim 5; and
a NodeB according to claim 7.

**Patentansprüche**

1. Verfahren zum Bestimmen eines Leistungsversatzes (Power Offset, PO), das Folgendes umfasst:

Empfangen, durch eine erste Entität, von POs, die jeweils allen MAC-d-Flüssen entsprechen, die einen Dienst transportieren, der in einer Benutzereinrichtung (User Equipment, UE) gesendet werden soll, von einer Netzsteuereinheit, und Empfangen, durch die erste Entität, eines PO, der Disponierungsinformationen (Scheduling Information, SI) entspricht, von der Netzsteuereinheit;

wobei die POs, die allen MAC-d-Flüssen entsprechen, und die PO, die den SI entspricht, ebenfalls durch die Netzsteuereinheit für eine zweite Entität (101) konfiguriert werden;

wenn eine momentan gesendete MAC E-DCH-Protokolldateneinheit (MAC-ePDU) nur die SI umfasst, Bestimmen, durch die erste Entität, des PO, der den SI entspricht, als den PO, welcher der momentan gesendeten MAC-e PDU (102) entspricht;

wenn eine momentan gesendete MAC-e PDU die SI und Daten einer höheren Schicht umfasst, die durch mindestens einen MAC-d-Fluss transportiert werden, oder nur Daten einer höheren Schicht umfasst, die durch die mindestens eins MAC-d-Fluss transportiert werden, Bestimmen, durch die erste Entität, eines maximalen PO unter den POs, die allen MAC-d-Flüssen entsprechen, als den PO, welcher der momentan gesendeten MAC-e PDU (102) entspricht;

wobei die erste Entität die UE ist und die zweite Entität ein NodeB ist, oder die erste Entität ein NodeB ist und die zweite Entität die UE ist.

2. Verfahren nach Anspruch 1, das des Weiteren Folgendes umfasst:

wenn ein neuer MAC-d-Fluss für die erste Entität konfiguriert wird, Konfigurieren, durch die Netzsteuereinheit, eines PO, der dem neuen MAC-d-Fluss für die erste Entität entspricht; oder wenn ein MAC-d-Fluss, der für die erste Entität konfiguriert ist, entfernt wird, Löschen, durch die Netzsteuereinheit, eines PO, der dem MAC-d-Fluss für die erste Entität entspricht.

3. Verfahren nach Anspruch 1, wobei die erste Entität der NodeB ist und die zweite Entität die UE ist, wobei das Verfahren des Weiteren Folgendes umfasst:

nachdem der NodeB den PO bestimmt hat, welcher der momentan gesendeten MAC-e PDU entspricht, Berechnen, durch den NodeB, eines Signal-Interferenz-Verhältnisses (Signal-to-Interference Ratio, SIR) auf der Basis des PO, welcher der momentan gesendeten MAC-e PDU (103) entspricht.

4.  Verfahren nach Anspruch 1, wobei die erste Entität die UE ist und die zweite Entität der NodeB ist, wobei das Verfahren des Weiteren Folgendes umfasst:

nachdem die UE den PO bestimmt hat, welcher der momentan gesendeten MAC-e PDU entspricht, Konfigurieren, durch die UE, einer Sendeleistung für einen erweiterten physischen Uplink-Steuerkanal (Enhanced Physical Uplink Control Channel, E-PUCH) auf der Basis des PO, welcher der MAC-e PDU (104) entspricht.

5.  Benutzereinrichtung (UE), die Folgendes umfasst:

eine erste Konfigurationsempfangseinheit (201) und eine erste Bestimmungseinheit (202);
wobei
die erste Konfigurationsempfangseinheit (201) dafür ausgelegt ist, einen PO zu empfangen, der Disponierungsinformationen (Scheduling Information, SI) entsprechend konfiguriert ist, und POs zu empfangen, die jeweils allen MAC-d-Flüssen, die einen zu sendenden Dienst transportieren, entsprechend konfiguriert sind;
wobei die POs, die allen MAC-d-Flüssen entsprechen, und der PO, der den SI entspricht, ebenfalls durch einen NodeB empfangen werden;
die erste Bestimmungseinheit (202) dafür ausgelegt ist, einen PO, der den SI entspricht, als den PO einer momentan gesendeten MAC E-DCH-Protokolldateneinheit (MAC-e PDU) zu bestimmen, wenn die momentan gesendete MAC-e PDU nur die SI umfasst; und
wenn eine momentan gesendete MAC-e PDU die SI und Daten einer höheren Schicht umfasst, die durch mindestens einen MAC-d-Fluss transportiert werden, oder nur die Daten einer höheren Schicht umfasst, die durch den mindestens einen MAC-d-Fluss transportiert werden, Bestimmen eines maximalen PO unter den POs aller MAC-d-Flüsse als den PO der momentan gesendeten MAC-e PDU.

6.  UE nach Anspruch 5, die des Weiteren Folgendes umfasst:

eine Leistungskonfigurationseinheit (203), der dafür ausgelegt ist, eine Sendeleistung für einen erweiterten physischen Uplink-Steuerkanal (Enhanced Physical Uplink Control Channel, E-PUCH) auf der Basis des PO zu konfigurieren, welcher der momentan gesendeten MAC-e PDU entspricht und der durch die erste Bestimmungseinheit bestimmt wurde.

7.  NodeB, der Folgendes umfasst:

eine zweite Konfigurationsempfangseinheit (301) und eine zweite Bestimmungseinheit (302);
wobei
die zweite Konfigurationsempfangseinheit (301) dafür ausgelegt ist, einen PO zu empfangen, der für Disponierungsinformationen (Scheduling Information, SI) konfiguriert ist, und POs zu empfangen, die für alle MAC-d-Flüsse konfiguriert sind, die einen Dienst in einer Benutzereinrichtung (UE) transportieren;
wobei die POs, die allen MAC-d-Flüssen entsprechen, und der PO, der den SI entspricht, ebenfalls durch die Benutzereinrichtung (UE) empfangen werden;
wobei die zweite Bestimmungseinheit dafür ausgelegt ist, einen PO zu bestimmen, der den SI des PO einer momentan gesendeten MAC E-DCH-Protokolldateneinheit (MAC-e PDU) entspricht, wenn die momentan gesendete Mac-e PDU nur die SI umfasst; und
wenn eine momentan gesendete MAC-e PDU die SI und Daten einer höheren Schicht umfasst, die durch mindestens einen MAC-d-Fluss transportiert werden, oder nur die Daten einer höheren Schicht umfasst, die durch den mindestens einen MAC-d-Fluss transportiert werden, Bestimmen eines maximalen PO unter den POs aller MAC-d-Flüsse als den PO der momentan gesendeten MAC-e PDU.

8.  NodeB nach Anspruch 7, der des Weiteren Folgendes umfasst:

eine Signal-Interferenz-Verhältnis (SIR)-Berechnungseinheit (303), die dafür ausgelegt ist, ein SIR auf der Basis des durch die zweite PO-Bestimmungseinheit bestimmten PO zu berechnen.

9.  System zum Bestimmen eines Leistungsversatzes (Power Offset, PO), **dadurch gekennzeichnet, dass** es Folgendes umfasst:

ein PO-Konfigurationsmodul, das dafür ausgelegt ist, POs zu konfigurieren, die jeweils allen MAC-d-Flüssen entsprechen, die einen Dienst transportieren, der in einer Benutzereinrichtung (UE) zu senden ist, und einen PO zu konfigurieren, der Disponierungsinformationen (Scheduling Information, SI) für den NodeB und das UE entspricht;
eine Benutzereinrichtung (User Equipment, UE) nach Anspruch 5; und
einen NodeB nach Anspruch 7.

## Revendications

1. Procédé de détermination d'un décalage de puissance, PO, comprenant les étapes consistant à :

   recevoir, au moyen d'une première entité, des PO correspondant respectivement à tous les flux MAC-d porteurs d'un service à transmettre à un équipement d'utilisateur, UE, à partir d'un contrôleur de réseau, et recevoir, au moyen de la première entité, un PO correspondant à une information de programmation, SI, en provenance du contrôleur de réseau ;
   dans lequel les PO correspondant à tous les flux MAC-d et les PO correspondant à la SI sont également configurés par le contrôleur de réseau pour une seconde entité (101) ;
   si une unité de données de protocole MAC d'E-DCH actuellement transmise, PDU MAC-e, ne comprend que la SI, déterminer, au moyen de la première entité, le PO correspondant à la SI comme le PO correspondant à la PDU MAC-e actuellement transmise (102) ;
   si une PDU MAC-e actuellement transmise comprend la SI et des données de couche supérieure acheminées par au moins un flux MAC-d ou ne comprend que des données de couche supérieure acheminées par ledit au moins un flux MAC-d, déterminer, au moyen de la première entité, un PO maximum parmi les PO correspondant à tous les flux MAC-d comme le PO correspondant à la PDU MAC-e actuellement transmise (102) ;
   dans lequel la première entité est l'UE et la seconde entité est un NodeB, ou la première entité est un NodeB et la seconde entité est l'UE.

2. Procédé selon la revendication 1, comprenant en outre l'étape consistant à :

   si un nouveau flux MAC-d est configuré pour la première entité, configurer, au moyen du contrôleur de réseau, un PO correspondant au nouveau flux MAC-d de la première entité ; ou si un flux MAC-d configuré pour la première entité est retiré, supprimer, au moyen du contrôleur de réseau, un PO correspondant au flux MAC-d de la première entité.

3. Procédé selon la revendication 1, dans lequel la première entité est le NodeB et la seconde entité est l'UE, le procédé comprenant en outre l'étape consistant à :

   après que le NodeB a déterminé le PO correspondant à la PDU MAC-e actuellement transmise, calculer, au moyen du NodeB, un rapport signal/brouillage (SIR) sur la base du PO correspondant à la PDU MAC-e actuellement transmise (103).

4. Procédé selon la revendication 1, dans lequel la première entité est l'UE et la seconde entité est le NodeB, le procédé comprenant en outre l'étape consistant à :

   après que l'UE a déterminé le PO correspondant à la PDU MAC-e actuellement transmise, configurer, au moyen de l'UE, une puissance de transmission pour un canal physique amélioré de commande de liaison montante, E-PUCH, sur la base du PO correspondant à la PDU MAC-e (104).

5. Équipement d'utilisateur (UE), comprenant :

   une première unité de réception de configuration (201) et
   une première unité de détermination (202),
   dans lequel
   la première unité de réception de configuration (201) est conçue pour recevoir un PO configuré correspondant à une information de programmation, SI, et des PO configurés correspondant respectivement à tous les flux MAC-d porteurs d'un service à transmettre ;
dans lequel les PO correspondant à tous les flux MAC-d et
le PO correspondant à la SI sont également reçus par un NodeB ;
la première unité de détermination (202) est conçue pour :

déterminer un PO correspondant à la SI comme le PO d'une unité de données de protocole MAC d'E-DCH actuellement transmise, PDU MAC-e, si la PDU MAC-e actuellement transmise ne comprend que la SI ; et si une PDU MAC-e actuellement transmise comprend la SI et des données de couche supérieure acheminées par au moins un flux MAC-d ou ne comprend que les données de couche supérieure acheminées par ledit au moins un flux MAC-d, déterminer un PO maximum parmi les PO correspondant à tous les flux MAC-d comme le PO de la PDU MAC-e actuellement transmise.

6.  UE selon la revendication 5, comprenant en outre :

une unité de configuration de puissance (203), conçue pour configurer une puissance de transmission pour un canal physique amélioré de commande de liaison montante, sur la base du PO correspondant à la PDU MAC-e actuellement transmise, déterminé par la première unité de détermination.

7.  NodeB comprenant :

une seconde unité de réception de configuration (301) et
une seconde unité de détermination (302) ;
dans lequel
la seconde unité de réception de configuration (301) est conçue pour recevoir un PO configuré pour une information de programmation, SI, et des PO configurés pour tous les flux MAC-d porteurs d'un service dans l'équipement d'utilisateur (UE) ;
dans lequel les PO correspondant à tous les flux MAC-d et le PO correspondant à la SI sont également reçus par l'équipement d'utilisateur, UE ;
la seconde unité de détermination est conçue pour :

déterminer un PO correspondant à la SI du PO d'une unité de données de protocole MAC d'E-DCH actuellement transmise, PDU MAC-e, si la PDU MAC-e actuellement transmise ne comprend que la SI ; et si une PDU MAC-e actuellement transmise comprend la SI et des données de couche supérieure acheminées par au moins un flux MAC-d ou ne comprend que les données de couche supérieure acheminées par ledit au moins un flux MAC-d, déterminer un PO maximum parmi les PO de tous les flux MAC-d comme le PO de la PDU MAC-e actuellement transmise.

8.  NodeB selon la revendication 7, comprenant en outre :

une unité de calcul (303) de rapport signal/brouillage, SIR, conçue pour calculer un SIR sur la base du PO déterminé par la seconde unité de détermination de PO.

9.  Système de détermination d'un décalage de puissance, PO, **caractérisé en ce qu'**il comprend :

un module de configuration de PO, conçu pour configurer des PO correspondant respectivement à tous les flux MAC-d porteurs d'un service à transmettre à un équipement d'utilisateur, UE, et un PO correspondant à une information de programmation, SI, pour le NodeB et l'UE ;
un équipement d'utilisateur, UE, selon la revendication 5 ; et
un NodeB selon la revendication 7.

101

configure a PO corresponding to an information element constituting a MAC-e PDU for a
NodeB and a UE

102

determine, by the UE and the NodeB, a PO for a currently transmitted MAC-e PDU
based on the information element constituting the currently transmitted MAC-e PDU, the
PO configured and a predefined PO determining rule

103

the NodeB calculates an SIR based on the PO corresponding to the currently transmitted
MAC-e PDU

104

the UE configures a transmission power for the E-PUCH according to the determined PO
corresponding to the currently transmitted MAC-e PDU

FIG.1

201

first configuration
receiving unit

202

first determining unit

203

power configuring
unit

## FIG.2

301

second configuration
receiving unit

302

second determining
unit

303

SIR calculating unit

## FIG.3